Europäisches Patentamt

European Patent Office

Office européen des brevets

(19)

(11) **EP 0 794 160 B1**

(12) **FASCICULE DE BREVET EUROPEEN**

(45) Date de publication et mention
de la délivrance du brevet:
**14.07.1999 Bulletin 1999/28**

(51) Int. Cl.⁶: **C04B 35/584**

(21) Numéro de dépôt: **97420031.3**

(22) Date de dépôt: **27.02.1997**

(54) **Procédé de préparation d'une poudre réfractaire à partir de masses de contact usées issues de la production de silanes et produits refractaires obtenus**

Verfahren zur Herstellung eines feuerfesten Pulvers aus gebrauchten Kontaktmassen der Silanherstellung und hergestellte feuerfeste Produkte

Process for producing refractory powder from used contact masses resulting from the production of silanes and refractory products obtained therefrom

(84) Etats contractants désignés:
**DE ES GB IT SE**

(30) Priorité: **04.03.1996 FR 9602982**

(43) Date de publication de la demande:
**10.09.1997 Bulletin 1997/37**

(73) Titulaire:
**PEM ABRASIFS-REFRACTAIRES**
**92087 Paris La Défense (FR)**

(72) Inventeur: **Manier, Fernanda**
**74190 Passy (FR)**

(74) Mandataire:
**Mougeot, Jean-Claude et al**
**PECHINEY**
**28, rue de Bonnel**
**69433 Lyon Cedex 03 (FR)**

(56) Documents cités:
**EP-A- 0 494 129          DE-A- 2 933 342**
**DE-A- 3 131 732          DE-A- 4 205 980**
**US-A- 5 274 158**

- **DATABASE WPI Section Ch, Week 9641 Derwent Publications Ltd., London, GB; Class C04, AN 96-411212 XP002018036 & SU 1 797 255 A (HETEROORGANIC CPDS CHEM TECHN RES INST) , 10 Janvier 1996**
- **DATABASE WPI Section Ch, Week 8343 Derwent Publications Ltd., London, GB; Class L02, AN 83-798159 XP002018037 & JP 58 156 580 A (HIMEJI TOKUSHU GENR) , 17 Septembre 1983**

## Description

L'invention concerne un procédé de préparation de poudre réfractaire contenant au moins 40% de nitrure de silicium à partir de masses de contact usées issues de la réaction de synthèse des chlorosilanes ou organochlorosilanes utilisés dans la fabrication des silicones.

Elle concerne également une composition particulière de poudre réfractaire ayant comme constituant principal le nitrure de silicium, ainsi que des produits réfractaires réalisés à partir de cette poudre, notamment des masses de bouchage de trous de coulée des hauts-fourneaux et des fours électriques à arc.

## Etat de la technique

La synthèse des silicones est effectuée principalement à partir de diméthyldichlorosilane obtenu par attaque de silicium métallurgique en poudre par le chlorure de méthyle gazeux vers 300 à 350°C, en présence d'un catalyseur au cuivre. Cette réaction dite de ROCHOW est mondialement utilisée et laisse des quantités importantes de résidus désignés sous le nom de masses de contact usées, qui se présentent sous la forme de boues où sont concentrés divers éléments métalliques sous forme de siliciures ($FeSi_{2,4}$, $TiSi_2$, $Cu_3Si$), d'oxydes et de silicates.

Ces masses usées, si elles ont cessé d'être réactives dans les conditions opératoires de la réaction de ROCHOW, le sont par contre beaucoup lors de leur remise à l'air, et elles doivent être passivées et traitées avant leur mise en décharge. Les procédés de traitement sont nombreux et consistent généralement à oxyder le produit soit à l'air, soit en milieu aqueux. Le brevet US 5274158 de GENERAL ELECTRIC propose ainsi de stabiliser les masses usées par chauffage entre 900 et 1500°C sous gaz inerte, par exemple l'azote, avant mise en décharge.

Aucune des solutions proposées n'envisage le recyclage des masses usées. En effet, leur composition chimique, notamment leur teneur en silicium, est très variable, et d'autre part leur teneur en oxydes, en particulier $SiO_2$, est importante.

## But de l'invention

L'invention a pour but d'éviter la mise en décharge des masses usées issues de la réaction de ROCHOW, et au contraire de les utiliser pour préparer par nitruration des poudres réfractaires à base de nitrure de silicium aptes à la préparation de produits réfractaires, notamment des masses de bouchage de trous de coulée de hauts-fourneaux et de fours à arc.

## Objet de l'invention

L'invention a pour objet un procédé de préparation d'une poudre réfractaire contenant au moins 40% en poids de nitrure de silicium à partir de masses de contact usées issues de la synthèse des chlorosilanes, consistant à:

a) traiter si nécessaire la masse usée de manière à en éliminer le cuivre,
b) mélanger à la masse décuivrée du silicium ou un alliage riche en silicium, et éventuellement un composé réfractaire pulvérulent, de manière à ajuster la teneur en silicium non oxydé du mélange à une valeur prédéterminée > 30% en poids.
c) chauffer le mélange sous atmosphère d'azote jusqu'au démarrage de la réaction exothermique de nitruration,
d) à réduire en poudre le produit nitruré obtenu.

Le composé réfractaire pulvérulent ajouté au mélange à l'étape b) est de préférence de l'alumine, par exemple sous forme de poudre de bauxite, ou du nitrure de silicium, provenant par exemple d'une opération précédente, ou les deux. A la place ou en plus de l'alumine, on peut ajouter au mélange à nitrurer de l'aluminium sous forme de poudre de scories.

L'invention a également pour objet une poudre réfractaire contenant de 40 à 80% (en poids) de nitrure de silicium, de 5 à 40% de sialon, de 5 à 15% de carbure de silicium, de 1 à 25% de siliciure de fer FeSi, éventuellement de sinoïte $Si_2ON_2$ en quantité inférieure à 20%, les autres constituants ne dépassant pas 5%.

L'invention a enfin pour objet des produits réfractaires, notamment des masses de bouchage de trous de coulée de hauts fourneaux ou de fours à arc réalisées à partir des poudres réfractaires ayant la composition précédente ou issues du procédé selon l'invention.

## Description de l'invention

S'ils contiennent du cuivre provenant de l'utilisation d'un catalyseur au cuivre dans la réaction, les résidus récupérés à la sortie du réacteur de synthèse de dichlorodiméthylsilane sont d'abord traités, de manière connue, à l'aide par exemple d'une solution diluée d'acide sulfurique(entre 15 et 50%) à une température comprise entre 20 et 100°C, de façon à éliminer le cuivre sous forme de solution de sulfate, qui peut être réutilisé. La fraction insoluble, c'est-à-dire la masse décuivrée, est séchée et se présente sous forme d'une poudre de granulométrie inférieure à 0,1 mm.

Selon l'origine de la masse de contact usée et les conditions de la réaction, elle peut contenir une proportion très variable de silicium non oxydé, et cette variabilité est un obstacle majeur à son recyclage dans des applications industrielles qui exigent un minimum de reproductibilité. La demanderesse a eu l'idée, pour obtenir un produit réutilisable, de corriger cette teneur en silicium non oxydé et de la stabiliser à une valeur qui soit toujours supérieure à 30% du poids de la charge à nitrurer..

Dans ce but, on ajoute à la poudre de masse de contact décuivrée de la poudre de silicium métallurgique ou d'un alliage à forte teneur en silicium, tel que du ferrosilicium à 75% de Si, de granulométrie inférieure à 0,16 mm.

Si la masse décuivrée a une teneur en silice importante, on ajoute au mélange précédent de l'alumine et/ou de l'aluminium en poudre, de manière à transformer la silice, au cours de la nitruration ultérieure, en sialon $Si_3Al_3O_3N_5$ en évitant autant que possible la formation de sinoïte $Si_2ON_2$ qu'on obtient en l'absence d'aluminium.

Le mélange est ensuite chauffé dans un four sous atmosphère d'azote pour nitruration selon le procédé décrit au brevet EP 0494129 de la demanderesse, c'est-à-dire en ajoutant au mélange, pour servir de ballast thermique, une certaine quantité de poudre d'un composé réfractaire.

Ce composé peut être par exemple à base de nitrure de silicium, tel que la poudre réfractaire issue d'une mise en oeuvre précédente du procédé. Dans ce cas, il faut tenir compte dans l' appréciation du silicium non oxydé préexistant avant son ajustement, du silicium apporté par le nitrure ajouté. De même, dans la masse usée, il faut tenir compte du silicium libéré par la transformation du siliciure $FeSi_{2,4}$ en FeSi selon la réaction:

$$FeSi_{2,4} \rightarrow FeSi + 1,4\ Si.$$

C'est à partir de l'ensemble du silicium non oxydé provenant de la masse usée et du nitrure éventuel qu'on calcule le silicium à ajouter pour atteindre la valeur prédéterminée correspondant à la teneur de nitrure de silicium qu'on veut obtenir dans le produit final. Cette valeur prédéterminée doit être supérieure à 30% pour correspondre approximativement à la teneur minimale acceptable de 40% de nitrure pour les applications envisagées.

Le composé réfractaire servant de ballast thermique à la nitruration peut également comporter l'alumine mentionnée plus haut pour transformer la silice en sialon.

On chauffe à pression atmosphérique jusqu'au moment où démarre la réaction rapide et exothermique de nitruration et on s'efforce de maintenir cette température en jouant sur le débit d'azote.

On obtient ainsi un produit constitué principalement de nitrure de silicium $Si_3N_4$, en proportion pondérale comprise entre 40 et 80% et contenant également du sialon (de 5 à 40%), du carbure de silicium SiC (entre 5 et 15%) et du siliciure de fer FeSi (entre 1 et 25%). Le produit peut contenir de la sinoïte $Si_2ON_2$, mais sa proportion ne doit pas dépasser 20% si on veut garder les propriétés d'utilisation. Il peut contenir aussi d'autres produits tels que des siliciures, en proportion totale inférieure à 5%. Il peut être facilement réduit en poudre par égrugeage.

Une application particulièrement appropriée du produit selon l'invention est la préparation de masses de bouchage pour les trous de coulée des hauts-fourneaux ou des fours électriques à arc. Ces masses de bouchage sont habituellement préparées par mélange d'une poudre réfractaire, généralement du nitrure de silicium, et d'un liant organique thermodurcissable, ce mélange étant injecté dans les trous de coulée, de manière à assurer une étanchéité parfaite lors du bouchage, à permettre un perçage aisé à la coulée suivante et à résister à l'érosion par les produits de fusion pendant toute la durée de la coulée. La poudre réfractaire selon l'invention s'est révélée particulièrement bien adaptée à cette utilisation, en utilisant par exemple comme liant un produit carboné tel qu'une pâte de brasquage ou une pâte destinée à la fabrication en continu d'électrodes à autocuisson, appelées aussi électrodes Söderberg, utilisées dans des cuves d'électrolyse ignée ou des fours à arc.

La poudre réfractaire peut également être frittée pour fabriquer des pièces réfractaires de la même manière que de la poudre de nitrure de silicium pur.

## Exemples

### Exemple 1

Des résidus de la fabrication de dichlorodiméthylsilane ont été récupérés à la sortie d'un réacteur de synthèse et traités par une solution d'acide sulfurique pour en éliminer le cuivre. La fraction insoluble recueillie et séchée présentait une granulométrie 100% inférieure à 50 μm, et la composition suivante (en poids): Si: 38% $FeSi_{2,4}$: 21% $SiO_2$: 24% C: 9% SiC: 3% $Al_2O_3$: 2% Ti: 1%.

On a mélangé 300 kg de cette poudre avec 50 kg d'aluminium en poudre de granulométrie < 0,8 mm, 150 kg de poudre de silicium métallurgique de granulométrie < 0,16 mm et 250 kg de poudre réfractaire de granulométrie < 0,2 mm, obtenue par broyage du produit résultant d'une préparation précédente par le même mode opératoire. Le mélange a été introduit dans un four sous atmosphère d'azote chauffé à une température de 1350°C et on a réglé le débit d'azote pour se maintenir à cette température. Le produit obtenu avait la composition approximative suivante: $Si_3N_4$: 55% sialon: 27% SiC: 11% FeSi: 5% $Ti_5Si_3$: 0,5% autres 1,5%.

Ce produit a été réduit en poudre de granulométrie < 0,16 mm et mélangé à de la pâte carbonée utilisée habituellement pour les électrodes de type Söderberg, dans la proportion de 2/3 de poudre pour 1/3 de pâte. La masse plastique obtenue a été testée comme masse de bouchage sur un four à arc submergé de 20 MW produisant du ferrosilicium à 75% de Si. La qualité du bouchage et la facilité de reperçage ont été tout à fait semblables à celles de l'art antérieur.

## Exemple 2

360 kg de poudre de la masse usée décuivrée de l'exemple précédent ont été mélangés à 200 kg de silicium en poudre de granulométrie < 0,16 mm et 250 kg de poudre réfractaire de granulométrie < 0,2 mm, obtenue par broyage du produit d'une opération de traitement précédente. Ce mélange a été nitruré dans les mêmes conditions que dans l'exemple précédent. Le produit obtenu avait la composition approximative suivante: $Si_3N_4$: 50% sialon: 2% $Si_2ON_2$: 29% SiC: 12% FeSi: 6% autres: 1%.

Ce produit a été réduit en poudre de granulométrie < 0,16 mm et mélangé à de la pâte Söderberg fondue dans la proportion 2/3 de poudre pour 1/3 de pâte. Le mélange a été injecté comme masse de bouchage dans les mêmes conditions que dans l'exemple précédent et on a constaté quelques suintements de métal liquide à travers le bouchon, signe d'une étanchéité moins satisfaisante, qui résulte de la teneur trop élevée en sinoïte $Si_2ON_2$.

## Exemple 3

On a mélangé 350 kg de poudre de la masse décuivrée des exemples précédents à 275 kg de poudre de ferrosilicium à 75% de Si (granulométrie < 0,16 mm), 25 kg de poudre d'aluminium (granulométrie < 0,8 mm) et 250 kg de poudre réfractaire (granulométrie < 0,2 mm), issue de la nitruration de l'exemple 1. Ce mélange a été nitruré dans les mêmes conditions que celles de l'exemple 1.

Le produit obtenu présentait la composition approximative suivante: $Si_3N_4$: 47% sialon: 13% $Si_2ON_2$: 13% SiC: 11% FeSi: 15% autres: 1%.

Ce produit a été réduit en poudre, mélangé à de la pâte Söderberg et injecté comme masse de bouchage dans les mêmes conditions que précédemment. Cette masse de bouchage a donné des résultats satisfaisants, ce qui démontre que la teneur résiduelle en $Si_2ON_2$ n'a plus d'effet nuisible.

## Exemple 4

On a mélangé 300 kg de la masse usée décuivrée de l'exemple 1 à 235 kg de ferrosilicium à 75% de Si (granulométrie < 0,16 mm), 75 kg de poudre d'aluminium (granulométrie < 0,8 mm), 35 kg d'alumine Bayer et 250 kg de poudre réfractaire résultant d'une opération précédente.

Le produit nitruré dans les mêmes conditions que précédemment présentait la composition approximative suivante: $Si_3N_4$: 46% sialon: 31% SiC: 9% FeSi: 13% autres: 1%. Réduit en poudre et mélangé à de la pâte Söderberg comme dans les exemples précédents, il a été injecté comme masse de bouchage en donnant toute satisfaction.

## Revendications

1. Procédé de préparation par nituration d'une poudre réfractaire contenant plus de 40% de nitrure de silicium à partir de masses de contact usées issues de la synthèse des chlorosilanes, consistant à:

   a) traiter, si nécessaire, la masse usée de manière à en éliminer le cuivre,
   b) mélanger à la masse décuivrée du silicium ou un alliage riche en silicium, et éventuellement un composé réfractaire pulvérulent, de sorte que la teneur en silicium non oxydé du mélange à nitrurer soit ajustée à une valeur prédéterminée > 30% en poids,
   c) chauffer ce mélange sous atmosphère d'azote jusqu'au démarrage de la réaction exothermique de nitruration,
   d) réduire en poudre le produit nitruré obtenu.

2. Procédé selon la revendication 1, caractérisé en ce que le composé réfractaire ajouté au mélange b) est à base de nitrure de silicium.

3. Procédé selon la revendication 2, caractérisé en ce que le composé réfractaire à base de nitrure de silicium est la poudre réfractaire issue d'une mise en oeuvre précédente du procédé.

4. Procédé selon la revendication 1, caractérisé en ce que le composé réfractaire ajouté au mélange b) est de l'alumine.

5. Procédé selon la revendication 4, caractérisé en ce que l'alumine est introduite sous forme de bauxite.

6. Procédé selon l'une des revendications précédentes, caractérisé en ce qu'on ajoute au mélange b) de l'aluminium, par exemple sous forme de scories.

7. Poudre réfractaire apte à la fabrication de masses de bouchage de trou de coulée de métal liquide constituée de 40 à 80% (en poids) de nitrure de silicium, de 5 à 40% de sialon, de 5 à 15% de carbure de silicium et de 1 à 25% de siliciure de fer FeSi éventuellement de sinoïte $Si_2ON_2$ en en quantité inférieure à 20%, les autres constituants ne dépassant pas une teneur totale de 5%.

8. Masse de bouchage de trou de coulée de haut-fourneau ou de four électrique obtenue par injection d'un mélange de la poudre réfractaire issue du procédé selon l'une des revendications 1 à 6, et d'un liant organique.

9. Masse de bouchage de trou de coulée d'un haut-fourneau ou d'un four électrique obtenue par injection d'un mélange de poudre réfractaire selon la revendication 7 et d'un liant organique.

## Claims

1. Process for the preparation, by nitriding, of a refractory powder containing more than 40% of silicon nitride from spent contact masses issuing from chlorosilane synthesis, comprising:

   a) treating the spent mass so as to remove the copper from it if necessary,
   b) mixing the copper-free mass with silicon or a silicon-rich alloy and optionally a powdered refractory compound so the non-oxidised silicon content of the mixture to be nitrided is adjusted to a predetermined value > 30% by weight,
   c) heating this mixture in a nitrogen atmosphere to trigger the exothermic nitriding reaction,
   d) reducing the nitrided product obtained to powder.

2. Process according to claim 1, characterised in that the refractory compound added to mixture b) is based on silicon nitride.

3. Process according to claim 2, characterised in that the refractory compound based on silicon nitride is the refractory powder issuing from a previous implementation of the process.

4. Process according to claim 1, characterised in that the refractory compound added to mixture b) is alumina.

5. Process according to claim 4, characterised in that the alumina is introduced in the form of bauxite.

6. Process according to one of the preceding claims, characterised in that aluminium, for example in the form of slag, is added to mixture b).

7. Refractory powder suitable for the manufacture of masses for blocking molten metal tapholes, comprising 40 to 80% (by weight) of silicon nitride, 5 to 40% of sialon, 5 to 15% of silicon carbide and 1 to 25% of iron silicide FeSi, optionally sinoite $Si_2ON_2$ in a quantity of less than 20%, the other constituents not exceeding a total content of 5%.

8. A taphole blocking mass for blast furnaces or electric furnaces obtained by injecting a mixture of the refractory powder issuing from the process according to one of claims 1 to 6 and an organic binder.

9. A taphole blocking mass for a blast furnace or and electric furnace obtained by injecting a mixture of refractory powder according to claim 7 and an organic binder.

## Patentansprüche

1. Verfahren zur Herstellung durch Nitrierung eines feuerfesten Pulvers, das mehr als 40 % Siliziumnitrid enthält, aus gebrauchten Kontaktmassen der Synthese von Chlorsilanen, bei dem:

   a) die gebrauchte Masse wenn nötig behandelt wird, um das Kupfer zu entfernen,
   b) der entkupferten Masse Silizium oder eine siliziumreiche Legierung und eventuell eine pulverige feuerfeste Verbindung beigemischt werden, um den Gehalt des zu nitrierenden Gemischs an nicht oxidiertem Silizium auf einen vorbestimmten Wert > 30 Gew.-% einzustellen,
   c) dieses Gemisch unter Stickstoffatmosphäre so lange erhitzt wird, bis die exotherme Nitrierungsreaktion einsetzt,
   d) das hergestellte nitrierte Produkt zu Pulver zerstoßen wird.

2. Verfahren nach Anspruch 1, dadurch gekennzeichnet, daß die feuerfeste Verbindung, die dem Gemisch b) zugesetzt wird, auf Siliziumnitridbasis ist.

3. Verfahren nach Anspruch 2, dadurch gekennzeichnet, daß die feuerfeste Verbindung auf Siliziumnitridbasis das feuerfeste Pulver ist, das aus einer vorhergehenden Durchführung des Verfahrens stammt.

4. Verfahren nach Anspruch 1, dadurch gekennzeichnet, daß die feuerfeste Verbindung, die dem Gemisch b) zugesetzt wird, Tonerde ist.

5. Verfahren nach Anspruch 4, dadurch gekennzeichnet, daß die Tonerde in Form von Bauxit eingebracht wird.

6. Verfahren nach einem der vorhergehenden Ansprüche, dadurch gekennzeichnet, daß dem Gemisch b) Aluminium, z.B. in Form von Schlacke, zugesetzt wird.

7. Feuerfestes Pulver geeignet für die Herstellung von Stopfmasse für ein Metallschmelzeabstichloch, bestehend aus 40 bis 80 (Gew.-)% Siliziumnitrid, 5 bis 40 % Salon, 5 bis 15 % Siliziumkarbid und 1 bis 25 % Siliziumeisen FeSi und eventuell Sinoit $Si_2ON_2$ in einer Menge von weniger als 20 %, wobei die weiteren Bestandteile einen Gesamtgehalt von 5 % nicht übersteigen.

8. Stopfmasse für ein Abstichloch eines Hoch- oder Elektroofens, die durch Einspritzen eines Gemischs aus dem feuerfesten Pulver des Verfahrens nach einem der Ansprüche 1 bis 6 und einem organischen Bindemittel hergestellt wird.

9. Stopfmasse für ein Abstichloch eines Hoch- oder Elektroofens, die durch Einspritzen eines Gemischs aus einem feuerfesten Pulver nach Anspruch 7 und einem organischen Bindemittel hergestellt wird.